# EUROPÄISCHE PATENTANMELDUNG

(11) **EP 3 923 456 A1**
(43) Veröffentlichungstag der Anmeldung: **15.12.2021**
(21) Anmeldenummer: 21177355.1
(22) Anmeldetag: 02.06.2021
(51) Int. Cl.: H02K 15/04, H02K 15/06, H02K 3/51, H02K 15/00

(54) **VERFAHREN ZUR HERSTELLUNG EINER WICKLUNG FÜR EINEN ROTOR EINER ELEKTRISCHEN MASCHINE**

(30) Priorität: 09.06.2020 DE 102020115248
(71) Anmelder: SEG Automotive Germany GmbH, 70499 Stuttgart (DE)
(72) Erfinder: Hülsemeyer, Lars, 31515 Wunstorf (DE)
(74) Vertreter: Steinbauer, Florian

(57) **Zusammenfassung**

Die Erfindung betrifft ein Verfahren zur Herstellung einer Wicklung, insbesondere einer Steckwicklung, für einen Rotor (100) einer elektrischen Maschine, insbesondere Startermotor, wobei der Rotor (100) aus einer Vielzahl von U-förmig gebogenen Leiterelementen (120) gebildet wird, wobei jedes der Leiterelemente (120) ein geschlossenes Ende und ein offenes Ende aufweist, wobei das offene Ende einen ersten Schenkel und einen zweiten Schenkel aufweist, wobei das Verfahren das Einstecken der offenen Enden der Vielzahl von Leiterelementen (120) in eine Vielzahl von Nuten (13,14) eines Formwerkzeugs (10), das Verschränken der Vielzahl von Leiterelementen (120), so dass die geschlossenen Enden der U-förmig gebogenen Leiterelemente (120) aus den Nuten (13,14) des Formwerkzeugs (10) hervorstehen und einen Wickelkopf (105) bilden, wobei der Wickelkopf (105) während des Verschränkens der Vielzahl von Leiterelementen (120) in eine sich verjüngende Form gebracht wird, wobei in einer Schnittebene, welche die Mittelachse (140) des Formwerkzeugs (10) enthält, wobei ein Winkel zwischen einer durch einen ersten Punkt (108) und einen zweiten Punkt (109) verlaufenden Geraden (107) und der Mittelachse (140) des Formwerkzeugs (10) mindestens 10° betragt, wobei der erste Punkt (108) an einem Außendurchmesser der Wicklung auf Höhe der Austrittsebene der Leiterelemente (120) aus dem Formwerkzeug (10) liegt, wobei der zweite Punkt (109) an einem Außendurchmesser der Wicklung auf einer Höhe liegt, die mindestens 10% und höchstens 90% einer Gesamthöhe des Wickelkopfes (105) entspricht, umfasst, sowie eine elektrische Maschine.

## Beschreibung

Die vorliegende Erfindung betrifft ein Verfahren zur Herstellung einer Wicklung für einen Rotor einer elektrischen Maschine sowie eine elektrische Maschine.

### Stand der Technik

Rotoren von elektrischen Maschinen, insbesondere Startermotoren, können aus einem metallischen Rotorkern mit eingesteckten U-förmigen Leiterelementen als Wicklung bzw. sog. Steckwicklung bestehen. Die aus dem Kern ragenden Bögen bilden einen sog. Wickelkopf, der gezielt geformt werden kann, wie z.B. in der DE 10 2014 226 224 A1 beschrieben. Dabei können die Bögen beispielsweise im Verbund bei axialer Kraftbeaufschlagung mit einem sog. Niederhaltewerkzeug in einem Formwerkzeug zueinander verdreht werden, so dass ein Wickelkopf mit nahezu zylindrischer Form gebildet wird. Der so entstandene Verbund aus verschränkten Leiterelementen kann anschließend mittels einer Transportvorrichtung aus dem Formwerkzeug entnommen und in eine Vielzahl von Nuten in dem Rotorkern gesteckt werden.

Während die Leiterelemente durch die axiale Kraftbeaufschlagung in ihrer axialen Ausbreitung begrenzt sind, können sie sich in radialer Richtung frei ausbreiten. Deshalb kann der geformte Wickelkopf z.B. eine Unwucht aufweisen, wodurch beispielsweise bei hoher Drehzahl unterschiedliche Kräfte auf den Wickelkopf wirken und diesen ungleichmäßig verformen können. Weiterhin kann der Wickelkopf eine geringere radiale Festigkeit (Schleuderfestigkeit) aufweisen.

### Offenbarung der Erfindung

Erfindungsgemäß werden ein Verfahren zur Herstellung einer Wicklung für einen Rotor einer elektrischen Maschine sowie eine elektrische Maschine mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung stellt ein Verfahren zur Herstellung einer Wicklung für einen Rotor, insbesondere einer Steckwicklung, bereit, das die Herstellung von Wickelköpfen mit gleicher radialer Ausbreitung unter Beibehaltung der radialen Festigkeit und unter Reduzierung der Unwucht ermöglicht.

Das erfindungsgemäße Verfahren wird insbesondere bei der Herstellung eines Rotors einer elektrischen Maschine, insbesondere Startermotors, verwendet. Die Wicklung wird aus einer Vielzahl von U-förmig gebogenen Leiterelementen gebildet, von denen jedes ein geschlossenes Ende und ein offenes Ende aufweist, wobei das offene Ende einen ersten Schenkel und einen zweiten Schenkel aufweist.

In dem erfindungsgemäßen Verfahren werden die offenen Enden der Vielzahl von Leiterelementen in eine Vielzahl von Nuten eines Formwerkzeugs gesteckt. Die ersten Schenkel werden beispielsweise in ein inneres Werkzeugteil des Formwerkzeugs und die zweiten Schenkel in ein äußeres Werkzeugteil des Formwerkzeugs gesteckt. Die geschlossenen Enden der U-förmig gebogenen Leiterelemente stehen dabei aus dem Formwerkzeug hervor und werden verschränkt, d.h. die Werkzeugteile werden zueinander verdreht, um einen Wickelkopf zu bilden.

Der Wickelkopf wird während des Verschränkens der Vielzahl von Leiterelementen oder danach in eine sich verjüngende Form gebracht, wobei in einer Schnittebene, welche die Mittelachse des Formwerkzeugs enthält, ein Winkel zwischen einer durch einen ersten Punkt und einen zweiten Punkt verlaufenden Geraden und der Mittelachse des Formwerkzeugs mindestens 10°, vorzugsweise mindestens 20°, vorzugsweise mindestens 25°, insbesondere mindestens 30°, beträgt. Der erste Punkt liegt an einem Außendurchmesser der Wicklung auf Höhe der Austrittsebene der Leiterelemente aus dem Formwerkzeug und der zweite Punkt liegt an einem Außendurchmesser der Wicklung auf einer Höhe, die mindestens 10% und höchstens 90% einer Gesamthöhe des Wickelkopfes entspricht. Der zweite Punkt liegt beispielsweise auf einer Höhe, die mindestens 20%, vorzugsweise mindestens 30%, vorzugsweise mindestens 40%, und vorzugsweise höchstens 80%, vorzugsweise höchstens 70%, vorzugsweise höchstens 60% der Gesamthöhe des Wickelkopfes entspricht. Die Unter- und Obergrenzen der Höhe des zweiten Punktes können insbesondere frei miteinander kombiniert werden.

Der Wickelkopf bzw. die freie Ausbreitung der Leiterelemente wird somit im Vergleich zum Stand der Technik zumindest entlang der Geraden von dem ersten Punkt zu dem zweiten Punkt radial begrenzt. Vorzugsweise ist der Winkel für jede Schnittebene, welche die Mittelachse enthält, gleich, d.h. der Winkel zwischen der Geraden und der Mittelachse wird über den gesamten Umfang beibehalten, so dass eine rotationssymmetrische Form entsteht. Der Wickelkopf ist somit verjüngt und erfährt aufgrund der geringeren radialen Lage geringere Fliehkräfte während der Rotation. Weiterhin weist er eine geringere Unwucht auf als herkömmliche zylindrische Wickelköpfe, wodurch der Wickelkopf beispielsweise bei hoher Drehzahl weniger Verformung erfährt. Der Wickelkopf weist somit eine größere radiale Festigkeit (Schleuderfestigkeit) auf.

Vorteilhafterweise umfasst das Bringen des Wickelkopfes in die sich verjüngende Form, dass zumindest die radial äußersten Schenkel der aus dem Formwerkzeug hervorstehenden Leiterelemente relativ zum Formwerkzeug tangential und radial nach innen (d.h. in Richtung der Mittelachse des Formwerkzeugs) abgewinkelt werden.

Während das radiale Abwinkeln dazu führt, dass der Wickelkopf in die sich verjüngende Form gebracht wird, führt das tangentiale Abwinkeln der Leiterelemente ferner dazu, dass die Leiterelemente einem Wicklungsschema entsprechend gegeneinander verschränkt werden und die axiale Ausdehnung des Wickelkopfes abnimmt.

Vorteilhafterweise beträgt ein Radialwinkel, d.h. der Winkel zwischen der Mittelachse des Formwerkzeugs und der Geraden, wenigstens 0,25, vorzugsweise wenigstens 0,3, vorzugsweise wenigstens 0,4, insbesondere wenigstens 0,5 eines Tangentialwinkels, d.h. des Winkels zwischen einem Leiterelement und einer senkrecht zur Mittelachse des Formwerkzeugs verlaufenden Stirnfläche des Formwerkzeugs. Mit anderen Worten können die Leiterenden vorzugsweise umso mehr radial nach innen gebogen sein, je weniger sie tangential gebogen sind. Insbesondere können so Materialschäden der Leiter vermieden und trotzdem eine kurze Bauhöhe des Wickelkopfes erreicht werden.

Vorteilhafterweise wird das Bringen des Wickelkopfes in die sich verjüngende Form derart durchgeführt, dass ein Außendurchmesser des Wickelkopfes an der Spitze kleiner ist als am ersten Punkt. Dies führt dazu, dass der Wickelkopf eine größere Schleuderfestigkeit aufweist und selbst bei großen Drehzahlen keine oder eine geringere Verformung erfährt.

Vorteilhafterweise umfasst das Bringen des Wickelkopfes in die sich verjüngende Form ferner das Absenken eines Niederhaltewerkzeuges auf den Wickelkopf bzw. auf die geschlossenen Enden der Leiterelemente, wobei das Niederhaltewerkzeug dazu eingerichtet ist, während der Verschränkung der Leiterelemente bzw. der Verdrehung beider Werkzeugteile zueinander um die Rotationsachse des Formwerkzeugs bzw. des späteren Wickelkopfes eine axiale Kraft in Richtung der Leiterelemente und eine radiale Kraft in Richtung der Mittelachse des Formwerkzeugs auf den Wickelkopf auszuüben.

Durch die axiale Kraft in Richtung der Leiterelemente wird die axiale Ausbreitung der Leiterelemente begrenzt, d.h. die Höhe des Wickelkopfes eingestellt. Die radiale Kraft in Richtung der Mittelachse des Formwerkzeugs führt ferner zur Ausbildung der sich verjüngenden Form des Wickelkopfes.

Da die Leiterelemente in das Formwerkzeug eingesteckt und somit fixiert sind, kann der Wickelkopf in die sich verjüngende Form gebracht werden, wobei insbesondere ein vorher eingestellter Radialwinkel und/oder Tangentialwinkel erhalten wird. Dies führt dazu, dass die derart hergestellten Wickelköpfe eine nahezu identische Form aufweisen und sich kaum voneinander unterscheiden. Die Wickelköpfe können somit präzise in die jeweils gewünschte Form gebracht werden.

Vorteilhafterweise weist das Niederhaltewerkzeug eine Negativform der sich verjüngenden Form auf, die den Wickelkopf aufnimmt. Die Leiterelemente werden somit in axialer Richtung und in radialer Richtung durch das Niederhaltewerkzeug begrenzt, wobei die Form der Negativform auf den Wickelkopf übertragen wird. Dies erhöht die Qualität der Form des Wickelkopfes und stellt sicher, dass sich die Form der Wickelköpfe nicht unterscheidet.

Vorteilhafterweise umfasst das Bringen des Wickelkopfes in die sich verjüngende Form ein Verdrehen eines inneren Werkzeugteils des Formwerkzeugs in Bezug auf ein äußeres Werkzeugteil des Formwerkzeugs. In das innere Werkzeugteil ist eine Innenschenkellage (beispielsweise die ersten Schenkel) und in das äußere Werkzeugteil ist eine Außenschenkellage (beispielsweise die zweiten Schenkel) eingesteckt. Das Verdrehen führt somit dazu, dass sich mindestens eine der Innen- und Außenschenkellagen entsprechend mit dem inneren oder äußeren Werkzeugteil dreht. Dabei werden die Leiterelemente gegeneinander verschränkt. Je größer dabei die Drehung des inneren oder äußeren Werkzeugteils ist, desto größer ist auch die Verschränkung der Leiterelemente.

Vorteilhafterweise ist das Niederhaltewerkzeug zusammen mit dem inneren Werkzeugteil oder mit dem äußeren Werkzeugteil drehbar oder stationär. Dies führt ferner dazu, dass die Leiterelemente einerseits gegen die Negativform des Niederhaltewerkzeuges gedrückt werden, um die sich verjüngende Form auszubilden, und andererseits bei Ausbildung der sich verjüngenden Form stabilisiert werden.

Vorteilhafterweise wird durch Einstellen einer Absenkhöhe des Niederhaltewerkzeuges die Höhe des Wickelkopfes vorgegeben. Insgesamt kann somit ein Wickelkopf präzise hergestellt werden, der die gewünschte Höhe und die gewünschte sich verjüngende Form aufweist, so können unterschiedliche Anforderungen, die die jeweilige elektrische Maschine, in die der Rotor eingebaut werden soll, an den Wickelkopf stellt, erfüllt werden.

Vorteilhafterweise umfasst das Bringen des Wickelkopfes in die sich verjüngende Form, dass der Wickelkopf rotationssymmetrisch ausgebildet wird. Ein rotationssymmetrischer Wickelkopf weist eine geringere Unwucht auf. Dies führt dazu, dass der Startermotor bei Rotation ruhiger läuft und somit Geräusche, die insbesondere bei hohen Drehzahlen entstehen, reduziert bzw. verhindert werden.

Vorteilhafterweise ist die sich verjüngende Form, in die der Wickelkopf gebracht wird, eine Konusform, eine Stufenform, eine konvexe Form oder eine konkave Form. Ist die sich verjüngende Form beispielsweise die Konusform, so verläuft der Mantel des Wickelkopfes von dem ersten Punkt entlang der Geraden durch den zweiten Punkt.

Ist die sich verjüngende Form beispielsweise eine Stufenform, können die Stufen beispielsweise auf der Geraden liegen, so dass die hintere Kante der einzelnen Stufen die Gerade und somit auch den zweiten Punkt berühren, oder unter der Geraden liegen, so dass die vordere Kante der einzelnen Stufen die Gerade und somit auch den zweiten Punkt berühren. Dagegen verlaufen konvexe oder konkave Formen entlang der Gerade derart, dass diese die Gerade am zweiten Punkt schneiden.

Diese Formen dienen somit dazu, den Wickelkopf entlang der Geraden vom ersten Punkt zum zweiten Punkt zu verjüngen und es sind ferner alternative Formen oder Mischformen möglich, die zur Realisierung dieser Verjüngung geeignet sind.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen
- Figur 1: zeigt schematisch eine bevorzugte Ausführungsform eines Formwerkzeugs zur Herstellung einer erfindungsgemäßen Wicklung für einen Rotor.
- Figur 2: zeigt schematisch eine bevorzugte Ausführungsform eines Niederhalte-werkzeuges.
- Figur 3: zeigt schematisch das Formwerkzeug mit eingesteckten Leiterelementen und Niederhaltewerkzeug.
- Figur 4: zeigt schematisch eine bevorzugte Ausführungsform eines Rotors mit einem konischen Wickelkopf.

### Ausführungsform(en) der Erfindung

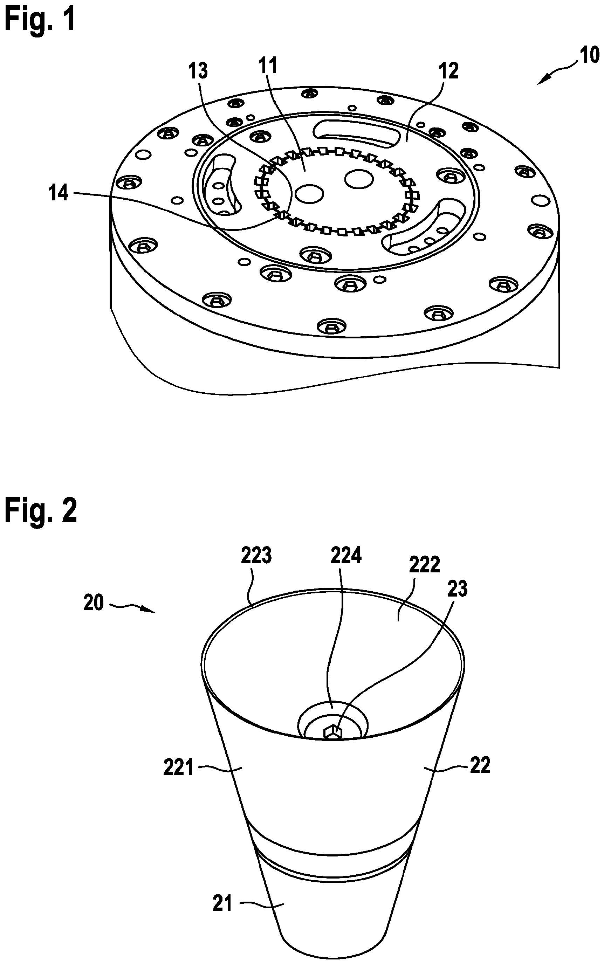

In Figur 1 ist schematisch eine bevorzugte Ausführungsform eines Formwerkzeugs zur Herstellung einer erfindungsgemäßen Wicklung für einen Rotor gezeigt und insgesamt mit 10 bezeichnet.

Das Formwerkzeug 10 weist ein inneres Werkzeugteil 11 und ein äußeres Werkzeugteil 12 auf, wobei das innere Werkzeugteil 11 sowie das äußere Werkzeugteil 12 relativ zueinander drehbar sind.

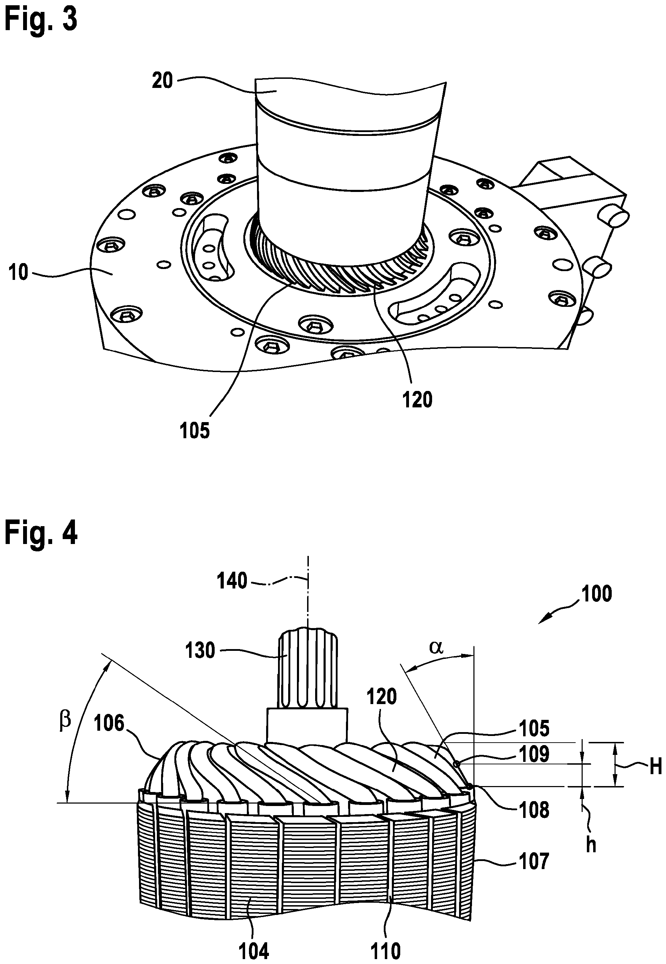

Das innere Werkzeugteil 11 weist an seinem äußeren Umfang Außennuten 13 und das äußere Werkzeugteil 12 an seinem inneren Umfang Innennuten 14 auf. Sowohl die Innennuten 14 als auch die Außennuten 13 sind dazu eingerichtet, eine Vielzahl von U-förmigen Leiterelementen 120 (siehe Figur 3) bzw. jeweils deren gerade Schenkel aufzunehmen.

Jedes der U-förmigen Leiterelemente 120 weist ein geschlossenes Ende und ein offenes Ende auf, wobei das offene Ende einen ersten Schenkel und einen zweiten Schenkel aufweist.

Der erste Schenkel ist beispielsweise in eine der Außennuten 13 des inneren Werkzeugteils 11 und der zweite Schenkel in eine der Innennuten 14 des äußeren Werkzeugteils 12 steckbar. Die geschlossenen Enden der Vielzahl von Leiterelementen 120 stehen nach Einstecken in das Formwerkzeug 10 aus dem Formwerkzug 10 hervor und bilden einen Wickelkopf 105 (siehe Figur 3).

Durch Drehung beider Werkzeugteile relativ zueinander können die Leiterelemente 120 einem Wicklungsschema entsprechend miteinander verschränkt werden.

Jedoch können sich die Leiterelemente 120 bei der Bildung des Wickelkopfes 105 in die radiale Richtung beliebig erstrecken und eine zufällige Form ausbilden. Ein derart gebildeter Wickelkopf kann eine Unwucht aufweisen, wodurch beispielsweise bei hoher Drehzahl unterschiedliche Kräfte auf den Wickelkopf wirken und diesen ungleichmäßig verformen können. Weiterhin kann der Wickelkopf eine geringere radiale Festigkeit (Schleuderfestigkeit) aufweisen. Um diese radiale Erstreckung zu verhindern, wird ein Niederhaltewerkzeug 20 (siehe Figur 2) verwendet, um den Wickelkopf 105 in eine sich verjüngende Form zu bringen, wobei die sich verjüngende Form beispielsweise eine Konusform, eine Stufenform, eine konvexe Form oder eine konkave Form ist.

In Figur 2 ist schematisch eine bevorzugte Ausführungsform des Niederhaltewerkzeuges 20 gezeigt, um den Wickelkopf 105 in die sich verjüngende Form, hier Konusform, zu bringen. Figur 3 zeigt schematisch das Formwerkzeug 10 mit eingesteckten Leiterelementen 120 und Niederhaltewerkzeug 20.

Das Niederhaltewerkzeug 20 umfasst ein Halterungsbauteil 21 und ein Konusbauteil 22. Das Konusbauteil 22 weist auf der Außenseite einen zylinderförmigen Mantel 221 und im Inneren eine Negativform in Form eines Innenkonus 222 auf.

Das Halterungsbauteil 21 kann ferner aus einem festen Halterungsbauteil und einem drehbaren Halterungsbauteil bestehen, das drehbar zum festen Halterungsbauteil gelagert ist und die Drehbewegung des inneren Werkzeugteils 11 oder des äußeren Werkzeugteils 12 des Formwerkzeugs 10 annehmen kann, um die Leiterelemente 120 vor Relativbewegungen und Beschädigungen zu schützen.

Das Konusbauteil 22 weist eine erste Öffnung 223 auf. Von der ersten Öffnung 223 verläuft der Innenkonus 222 konusförmig in Richtung des Haltebauteils 21, so dass sich ein Innendurchmesser des Konusbauteils 22 in Richtung des Haltebauteils 21 verjüngt. Ein Innendurchmesser der ersten Öffnung 223 ist vorzugsweise größer als ein Innendurchmesser des Wickelkopfes 105, so dass der Wickelkopf 105 beschädigungsfrei von dem Konusbauteil 22 aufgenommen werden und in eine Konusform gebracht werden kann.

Ein Befestigungselement, z.B. eine Schraube 23, dient dazu, das Konusbauteil 22 mit dem Halterungsbauteil 21 zu verbinden. Dazu wird die Schraube 23 durch eine zweite Öffnung 224 des Konusbauteils 22 geschoben und verbindet das Konusbauteil 22 von innen mit dem Halterungsbauteil 21. Alternativ können andere Befestigungselemente, zum Beispiel Bolzen, oder andere Befestigungsarten, wie beispielsweise Löten, Verkleben, Schweißen usw., verwendet werden, um das Konusbauteil 22 mit dem Haltebauteil 21 zu verbinden. Ferner ist möglich, das Haltebauteil 21 einstückig mit dem Konusbauteil 22 auszubilden.

Zum Schränken und Formen des Wickelkopfes 105 sind, wie in Figur 3 ersichtlich, die Leiterelemente 120 in das Formwerkzeug 10 eingesteckt. Das Niederhaltewerkzeug 20 wird von oben auf den Wickelkopf 105 abgesenkt. Das Niederhaltewerkzeug 20 ist dazu eingerichtet, während der tangentialen Verschränkung eine axiale Kraft in Richtung der Leiterelemente 120 und eine radiale Kraft in Richtung der Mittelachse 140 des Formwerkzeugs 10 bzw. des Wickelkopfes 105 auszuüben. Durch Einstellen einer Absenkhöhe des Niederhaltewerkzeuges 20 kann die Höhe des Wickelkopfes 105 präzise eingestellt werden.

Das Niederhaltewerkzeug 20 ist ferner dazu eingerichtet, die Leiterelemente 120 während des Verdrehens des inneren Werkzeugteils 11 und/oder des äußeren Werkzeugteils 12 zu stabilisieren. Dazu ist das Niederhaltewerkzeug 20 hier stationär, d.h. es dreht sich bei Verdrehung eines der Werkzeugteile nicht mit, ausgebildet. Jedoch kann das Niederhaltewerkzeug 20 auch dazu ausgebildet sein, dass es sich mit dem inneren Werkzeugteil 11 oder mit dem äußeren Werkzeugteil 12 dreht.

Die geschlossenen Enden der Leiterelemente 120 bzw. der Wickelkopf 105 werden somit in die konische Form gebracht. Dieser konische Wickelkopf 105 zeichnet sich dadurch aus, dass die freie radiale Ausbreitung der Leiterelemente 120 im Vergleich zu zylindrischen Wickelköpfen begrenzt wird. Der Wickelkopf 105 ist somit im Wesentlichen konisch und weist eine geringere Unwucht auf als zylindrische Wickelköpfe, wodurch er beispielsweise bei hoher Drehzahl weniger Verformung erfährt bzw. eine höhere Drehzahlfestigkeit hat. Der Wickelkopf 105 weist somit eine größere radiale Festigkeit (Schleuderfestigkeit) auf.

Jeder mit einem solchen Niederhaltewerkzeug 20 hergestellte konische Wickelkopf weist ferner im Wesentlichen die gleiche konische Form auf und ist annähernd identisch mit anderen derart hergestellten Wickelköpfen. Dies führt dazu, dass selbst Wickelköpfe, die in unterschiedlichen Werken aber mit einem baugleichen Niederhaltewerkzeug hergestellt werden, die gleiche konische Form aufweisen. Die Verwendung des Niederhaltewerkzeuges 20 führt somit dazu, dass eine bestimmte Form der Wickelköpfe gewährleistet werden kann.

Sollen zudem verschiedene Wickelköpfe, beispielsweise mit verschiedenen Neigungswinkeln oder Wickelkopfhöhen hergestellt werden, können leicht andere Niederhaltewerkzeuge eingesetzt werden. Die Produktion kann so ohne große Verzögerungen flexibel an die jeweiligen Erfordernisse angepasst werden.

Ferner kann je nach Wahl der Negativform des Niederhaltewerkzeugs 20 der Wickelkopf in eine bestimmte Form gebracht werden, so dass der Wickelkopf auch in Form einer Stufenform, einer konvexen Form oder konkaven Form ausgebildet werden kann. Die Form kann je nach Anwendung des Wickelkopfes bevorzugt und so entsprechend der Anforderung an den Wickelkopf ausgewählt werden.

In Figur 4 ist schematisch eine bevorzugte Ausführungsform eines Rotors 100 mit einem konischen Wickelkopf 105 gezeigt.

Der Rotor 100 umfasst einen Rotorkern 104 sowie eine Rotorwelle 130 zur Lagerung des Rotors 100 und zur Übertragung eines Drehmoments. Der Rotorkern 104 weist eine Vielzahl von Nuten 110 auf, in welchen die aus der Vielzahl der U-förmig gebogenen Leiterelemente 120 gebildete Wicklung eingesteckt ist.

In einer Schnittebene, welche die Mittelachse 140 des Rotorkerns 104 enthält, beträgt ein Radialwinkel α zwischen einer durch einen ersten Punkt 108 und einen zweiten Punkt 109 verlaufenden Geraden 107 und der Mittelachse 140 des Rotorkerns 104, hier ca. 20°. Der erste Punkt 108 liegt an einem Außendurchmesser der Wicklung auf Höhe der Austrittsebene der Leiterelemente 120 aus dem Rotorkern 104 und der zweite Punkt 109 liegt an einem Außendurchmesser der Wicklung auf einer Höhe h. Die Höhe h entspricht ca. 45% einer Gesamthöhe H des Wickelkopfes 105. Ein Tangentialwinkel β zwischen einem Leiterelement 120 und einer senkrecht zur Mittelachse 140 des Rotorkerns 104 verlaufenden Stirnfläche des Rotorkerns 104 beträgt hier ca. 40°. Der Radialwinkel α beträgt hier somit ca. das 0,5-fache des Tangentialwinkels β. Das Verhältnis von Radialwinkel α zu Tangentialwinkel β kann jedoch von einem Fachmann je nach Anwendung des Rotors 100 auf die jeweiligen Anforderungen eingestellt werden.

Auf Grund der konischen Form ist ein Außendurchmesser des Wickelkopfes 105 an der Spitze, d.h. auf der dem Rotorkern 104 abgewandten Seite, kleiner als beim Austritt aus dem Rotorkern 104. Dies führt dazu, dass der Wickelkopf 105 eine größere Schleuderfestigkeit aufweist und selbst bei großen Drehzahlen keine oder geringere Verformung erfährt. Der Wickelkopf 105 ist somit robuster als zylindrische Wickelköpfe.

## Patentansprüche

1. Verfahren zur Herstellung einer Wicklung, insbesondere einer Steckwicklung, für einen Rotor (100) einer elektrischen Maschine, insbesondere Startermotor, wobei der Rotor (100) aus einer Vielzahl von U-förmig gebogenen Leiterelementen (120) gebildet wird, wobei jedes der Leiterelemente (120) ein geschlossenes Ende und ein offenes Ende aufweist, wobei das offene Ende einen ersten Schenkel und einen zweiten Schenkel aufweist, wobei das Verfahren umfasst:
Einstecken der offenen Enden der Vielzahl von Leiterelementen (120) in eine Vielzahl von Nuten (13,14) eines Formwerkzeugs (10), wobei die geschlossenen Enden der U-förmig gebogenen Leiterelemente (120) aus den Nuten (13,14) des Formwerkzeugs (10) hervorstehen;
Verschränken der Vielzahl von Leiterelementen (120), so dass die geschlossenen Enden der U-förmig gebogenen Leiterelemente (120) einen Wickelkopf (105) bilden;
wobei der Wickelkopf (105) in eine sich verjüngende Form gebracht wird, wobei in einer Schnittebene, welche die Mittelachse (140) des Formwerkzeugs (10) enthält, ein Winkel zwischen einer durch einen ersten Punkt (108) und einen zweiten Punkt (109) verlaufenden Geraden (107) und der Mittelachse (140) des Formwerkzeugs (10) mindestens 10° beträgt, wobei der erste Punkt (108) an einem Außendurchmesser der Wicklung auf Höhe der Austrittsebene der Leiterelemente (120) aus dem Formwerkzeug (10) liegt, wobei der zweite Punkt (109) an einem Außendurchmesser der Wicklung auf einer Höhe (h) liegt, die mindestens 10% und höchstens 90% einer Gesamthöhe (H) des Wickelkopfes (105) entspricht.

2. Verfahren nach Anspruch 1, wobei das Bringen des Wickelkopfes (105) in die sich verjüngende Form umfasst, zumindest die radial äußersten Schenkel der aus dem Formwerkzeug (10) hervorstehenden Leiterelemente (120) relativ zum Formwerkzeug (10) tangential und radial nach innen abzuwinkein.

3. Verfahren nach Anspruch 2, wobei ein Radialwinkel (a) wenigstens das 0,25-fache eines Tangentialwinkels (β) beträgt.

4. Verfahren nach einem der vorstehenden Ansprüche, wobei das Bringen des Wickelkopfes (105) in die sich verjüngende Form derart durchgeführt wird, dass ein Außendurchmesser des Wickelkopfes (105) an der Spitze kleiner ist als am ersten Punkt (108).

5. Verfahren nach einem der vorstehenden Ansprüche, wobei das Bringen des Wickelkopfes (105) in die sich verjüngende Form ferner umfasst:
Absenken eines Niederhaltewerkzeuges (20) auf den Wickelkopf (105), wobei das Niederhaltewerkzeug (20) dazu eingerichtet ist, während oder nach der Verschränkung der Leiterelemente (120) eine axiale Kraft in Richtung der Leiterelemente (120) und eine radiale Kraft in Richtung der Mittelachse (140) des Formwerkzeugs (10) auf den Wickelkopf (105) auszuüben.

6. Verfahren nach Anspruch 5, wobei das Niederhaltewerkzeug (20) eine Negativform der sich verjüngenden Form aufweist, die den Wickelkopf (105) aufnimmt.

7. Verfahren nach Anspruch 5 oder 6, wobei das Bringen des Wickelkopfes (105) in die sich verjüngende Form ein Verdrehen eines inneren Werkzeugteilteils (11) des Formwerkzeugs (10) relativ zu einem äußeren Werkzeugteil (12) des Formwerkzeugs (10) umfasst.

8. Verfahren nach Anspruch 7, wobei das Niederhaltewerkzeug (20) zusammen mit dem inneren Werkzeugteil (11) oder mit dem äußeren Werkzeugteil (12) drehbar oder stationär ist.

9. Verfahren nach einem der Ansprüche 5 bis 8, wobei durch Einstellen einer Absenkhöhe des Niederhaltewerkzeuges (20) die Höhe des Wickelkopfes (105) vorgegeben wird.

10. Verfahren nach einem der vorstehenden Ansprüche, wobei das Bringen des Wickelkopfes (105) in die sich verjüngende Form umfasst, den Wickelkopf (105) rotationssymmetrisch auszubilden.

11. Verfahren nach einem der vorstehenden Ansprüche, wobei die sich verjüngende Form, in die der Wickelkopf gebracht wird, eine Konusform, eine Stufenform, eine konvexe Form oder eine konkave Form ist.

12. Elektrische Maschine mit einem nach einem der Ansprüche 1 bis 11 hergestellten Wickelkopf (105).
